Europäisches Patentamt

European Patent Office

Office européen des brevets

(19)

(11) Veröffentlichungsnummer: **0 171 484**

**A1**

(12) # EUROPÄISCHE PATENTANMELDUNG

(21) Anmeldenummer: **84810638.1**

(51) Int. Cl.⁴: **F 26 B 23/00**

(22) Anmeldetag: **18.12.84**

(30) Priorität: 09.07.84 CH 3334/84

(43) Veröffentlichungstag der Anmeldung:
19.02.86 Patentblatt 86/8

(84) Benannte Vertragsstaaten:
AT BE CH DE FR GB IT LI NL SE

(71) Anmelder: Huber, Josef
Säntisstrasse 6
CH-8854 Siebnen(CH)

(71) Anmelder: Eberle, Heini
Flawilerstrasse 32b
CH-9242 Oberuzwil(CH)

(72) Erfinder: Huber, Josef
Säntisstrasse 6
CH-8854 Siebnen(CH)

(72) Erfinder: Eberle, Heini
Flawilerstrasse 32b
CH-9242 Oberuzwil(CH)

(74) Vertreter: Gachnang, Hans Rudolf
Algisserstrasse 33
CH-8500 Frauenfeld(CH)

(54) **Verfahren und Anlage zum Trocknen eines feuchten Gutes.**

(57) Nach dem erfindungsgemässen Verfahren zum Trocken von feuchtem Gut wird durch Erwärmen der aus der Umgebung angesaugten Frischluft (FL) deren relative Feuchtigkeit herabgesetzt, so dass sie aus dem zu trocknenden Gut (20) Feuchtigkeit aufnehmen kann. Der feuchten Abluft (AL) wird vor dem Austritt in die Umgebung durch den Verdampfer (7) einer Wärmepumpe (4) ein Teil der Wärme entzogen. Bei Temperaturen (T) unter 10°C wird ein Teil der feuchten Abluft (AL) der kalten Frischluft (FL) beigemischt, bevor diese durch den Kondensator (3) der Wärmepumpe (4) erwärmt wird.

EP 0 171 484 A1

Croydon Printing Company Ltd.

FIG. 1

0171484

- 1 -

## Verfahren und Anlage zum Trocknen eines feuchten Gutes

Die Erfindung betrifft ein Verfahren zum Trocknen eines feuchten Gutes gemäss Oberbegriff des Patentanspruches 1. Die Erfindung betrifft auch eine Anlage zum Trocknen eines feuchten Gutes gemäss Oberbegriff des Patentanspruches 5.

Verfahren und Anlagen zur Durchführung von Verfahren zum Trocknen von Gras sind bekannt.

In einer bekannten Anlage wird in einem geschlossenen Kreislauf die vom zu trocknenden Gut kommende feuchte Abluft in den Bereich eines kalten Verdampfers einer Wärmepumpe geführt und abgekühlt, so dass ihr ein Teil ihrer Feuchtigkeit als Kondenswasser entzogen wird. Die kalte und wieder trockenere Luft strömt nun weiter in den Bereich des warmen Kondensators der Wärmepumpe und wird erwärmt. Die vom Kondensator kommende warme und trockene Luft wird über einen Ventilator, üblicherweise ein herkömmliches Lüftergebläse durch das Gut geblasen und nimmt dessen Feuchtigkeit auf. Der Kreislauf beginnt anschliessend von neuem.

Anlagen dieser Art haben den Nachteil, dass bei steigender Aussentemperatur, z.B. mittags, deren Wärmeinhalt nicht wesentlich genutzt werden kann und folglich die gesamte aufzuwendende Energie von der Wärmepumpe erbracht werden muss. Zudem besteht die Gefahr, dass bei tiefen Aussentemperaturen, z.B. unter $12^{\circ}$ C, am Verdampfer Eis gebildet wird, das den Wirkungsgrad der Wärmepumpe verringert.

Der vorliegenden Erfindung liegt nun die Aufgabe zugrunde, ein Verfahren zu schaffen, welches die Nachteile der bekannten vermeidet und einen wirtschaftlicheren Betrieb ermöglicht.

Eine weitere Aufgabe besteht darin, eine Anlage zur Durchführung eines solchen Verfahrens zu schaffen.

Nach der Erfindung werden diese Aufgaben gemäss den kennzeichnenden Merkmalen des Verfahrensanspruches 1 und den kennzeichnenden Merkmalen des Vorrichtungsanspruches 5 gelöst.

Mit dem erfindungsgemässen Verfahren kann die Trocknungskapazität gegenüber den bekannten Verfahren um 30 % bis 100 % gesteigert werden, 30 % bei kaltem Regenwetter, 100 % bei Schönwetter.

Durch das Zumischen von warmer Abluft kann der Wirkungsgrad bei kaltem Wetter wirksam erhöht werden.

Im Gegensatz zu den bekannten Anlagen, bei denen die Luftfeuchtigkeit innerhalb des Kreislaufes dauernd überwacht werden muss, um eine Vereisung des Verdampfers oder sogar eine Befeuchtung des Gutes zu verhindern, kann in der erfindungsgemässen Anlage auf eine Steuerung oder Ueberwachung verzichtet werden.

Auch bei hoher Feuchtigkeit (Regenwetter) wird nämlich durch die Erwärmung der Frischluft deren relative Feuchtigkeit genügend herabgesetzt, damit eine Wasseraufnahme jederzeit möglich ist. Die durch das Gut weiter gesättigte Luft wird an die Umgebung abgegeben, nachdem ihr noch darin enthaltende Wärme entzogen worden ist.

Anhand eines illustrierten Ausführungsbeispieles wird die Erfindung näher beschrieben. Es zeigen:

Figur 1    eine schematische Darstellung einer Trocknungsanlage im Normalbetrieb,

Figur 2    eine Darstellung der Anlage nach Figur 1 mit Umluftanteil.

Auf der Ansaugseite eines Gebläses 1 zum Trocknen von in einem Schacht 2 eingefülltem Gut 20, z.B. welkes Gras, Mais, etc. ist der Kondensator 3 und der Kompressor samt Antriebsmotor einer Luft/Luftwärmepumpe 4 in einem Ansaugluftkanal 5 aufgestellt. In einem zweiten, im beschriebenen Beispiel oberhalb des Kanales 5 angeordneten Kanal 6 steht deren Verdampfer 7. Der Kanal 6 steht in Verbindung mit der Abluftseite des Schachtes 2 und fängt dort 40-60% der aus dem Gut 20 austretenden Luft (AL) auf. In Strömungsrichtung der Abluft (AL) gesehen nach dem Verdampfer 7 ist ein Sauggebläse 8 mit einem Abluftkanal 9 verbunden, der ins Freie führt. Vor dem Verdampfer 7, d.h. am Ende eines den Schacht 2 und den Kanal 6 verbindenden Kanales 10, kann ein Filter 11 zum Schutz des Verdampfers 7 vor Verschmutzung angeordnet sein.

Sowohl auf der Ansaugseite des Kanales 5 als auch zwischen dem Kanal 5 und dem Kanal 6 sind verstellbare Luftklappen 12, 13 bzw. 14 eingesetzt, wobei die Klappe 14 zwischen dem Verdampfer 7 und dem Filter 11 angebracht ist. Den unteren Abschluss des Schachtes 2 bildet ein Rost 15, durch den die vom Gebläse 1 kommende Trockenluft (TL) gleichmässig in das zu trocknende Gut 20 eingeleitet werden kann.

Als Antrieb für das Gebläse 1 kann ein Elektromotor 16 verwendet werden; es besteht aber auch die Möglichkeit, sowohl das Gebläse 1 als auch die Wärmepumpe 4 durch einen gemeinsamen Dieselmotor (nicht gezeigt) anzutreiben und dessen Abwärme über einen Wärmetauscher (nicht gezeigt) im Kanal 5 der durch die Klappen 12, 13 einströmenden Frischluft (FL) zuzuführen.

Im Betrieb wird durch die Klappen 12, 13 Frischluft (FL) mit einer relativen Feuchtigkeit von beispielsweise 92 % aus der Umgebung angesaugt und im Kanal 5 sowohl von der Abwärme des Kompressors 4 als auch vom Kondensator 3 erwärmt. Die um beispielsweise 5-8° C für Heu (und 25-30° C für Mais) erwärmte Luft (TL) weist nun eine relative Feuchtigkeit von ca. 40 % auf und wird durch das Gebläse 1 in den Schacht 2 mit dem zu trocknenden Gut 20 eingeführt. Bis zum Austritt aus dem Gut 20 am oberen Ende des Schachtes 2 steigt die relative Feuchtigkeit auf 90-100 %, und die Temperatur dieser Abluft (AL) kann um 6-7° C absinken. Der feuchten und allenfalls abgekühlten Luft (AL) wird beim Durchtritt durch den Wärmetauscher des Verdampfers 7 ein Teil ihrer Wärme entzogen und die gekühlte Luft danach durch den Kanal 9 an die Umgebung abgegeben.

Diese im Verdampfer 7 aufgenommene Energie wird im Kondensator 3 als Wärme an die durchfliessende Frischluft (FL) abgegeben.

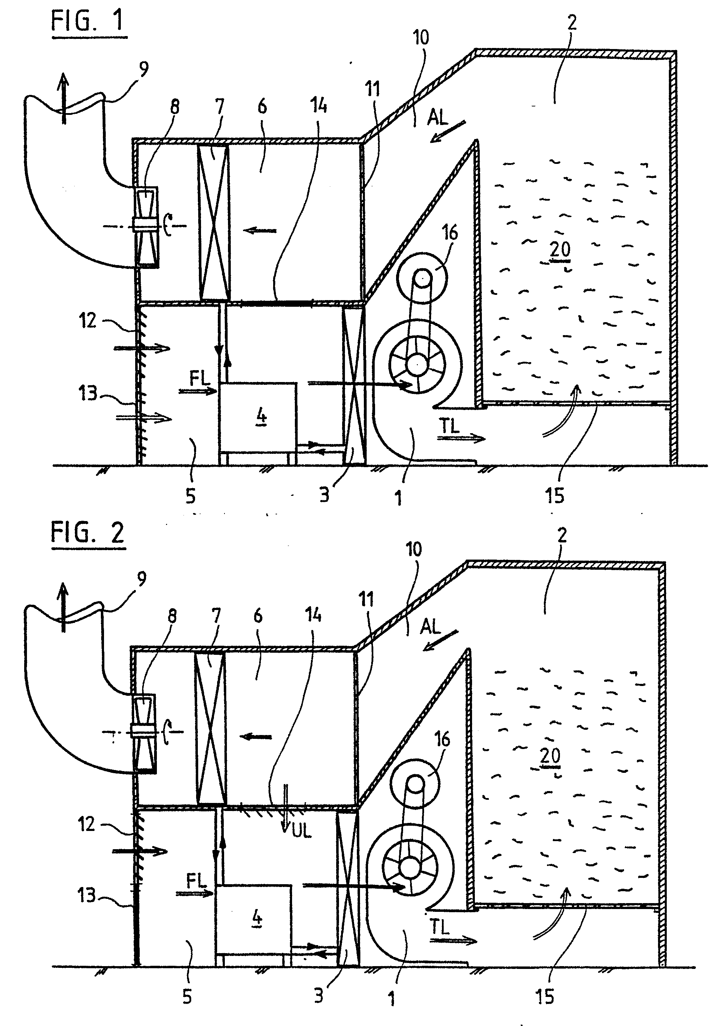

Im Beispiel nach Figur 1 wird unter "Normalbedingungen", d.h. Aussentemperaturen T > 10° C die gesamte Abluft (AL) in die Umgebung abgeleitet, nachdem mindestens die Hälfte davon durch den Verdampfer 7 geleitet worden ist. Ein Teil der Luft entweicht durch die Schachtwände. Aendern sich jedoch die Normalbedingungen, indem z.B. die Temperatur T der Frischluft (FL) unter 10° C sinkt, so

0171484

wird ein Teil der Abluft (AL) als Umluft (UL) direkt wieder zum Kondensator 3 geleitet (Figur 2), indem die Klappe 14 geöffnet und die Klappe 13 geschlossen wird. Die durch den Verdampfer 7 in die Umgebung austretende Luftmenge wird dabei nicht geändert, weil ein grösserer Anteil von Abluft (AL) aus dem Gut 20 übernommen wird.

Patentansprüche

1. Verfahren zum Trocknen eines feuchten Gutes, insbesondere landwirtschaftlicher Produkte mittels durch den Kondensator einer Wärmepumpe erwärmter und anschliessend durch ein Gebläse durch das Gut geblasener Luft, dadurch gekennzeichnet, dass aus der Umgebung angesaugte Frischluft (FL) zuerst durch den Kondensator (3) der Luft-Luft-Wärmepumpe (4) geführt und erwärmt wird, und dass aus dem zu trocknenden Gut (20) wieder austretende Abluft (AL) vor deren Austritt in die Umgebung durch den Verdampfer (7) der Wärmepumpe (4) geleitet wird.

2. Verfahren nach Anspruch 1, dadurch gekennzeichnet, dass 40% - 60% der aus dem Gut (20) austretenden Abluft (AL) durch den Verdampfer (7) der Wärmepumpe (4) geleitet wird.

3. Verfahren nach einem der Ansprüche 1 und 2, dadurch gekennzeichnet, dass dem Kondensator (3) nebst der Frischluft (FL) ein Anteil von das zu trocknende Gut verlassender Abluft (AL) direkt zugeleitet wird.

4. Verfahren nach Anspruch 3, dadurch gekennzeichnet, dass der Anteil der Abluft (AL) an der durch den Kondensator (3) geförderten Luftmenge zwischen 40% und 60% beträgt.

5. Anlage zum Trocknen von feuchtem Gut, insbesondere landwirtschaftlicher Produkte, bestehend aus einem Schacht zur Aufnahme des Gutes, einem Ansaugkanal und einem darin angeordneten Gebläse zum Zuführen von Luft in den Schacht und einem Kanal zum Abführen von oben aus dem Gut wieder austretender Luft sowie einer Wärmepumpe, deren Kondensator im Ansaugkanal angeordnet ist, dadurch gekennzeichnet, dass der Verdampfer (7) der Wärmepumpe (4) am Ende des Kanales (6) angeordnet ist, so dass die gesamte am Verdampfer (7) vorbeigeleitete Abluft (AL) hinter diesem in die Umgebung austreten kann.

6. Anlage nach Anspruch 5, dadurch gekennzeichnet, dass im Kanal (6) zwischen dem Schacht (2) und dem Verdampfer (7) eine einstellbare Klappe (14) angebracht ist, die den Kanal (5) mit dem Bereich des Kanales (6) verbindet, der auf der Ansaugseite des Kondensators (3) liegt.

7. Anlage nach Anspruch 5, dadurch gekennzeichnet, dass der Kanal (6) über dem Kanal (5) angeordnet ist.

FIG. 1

FIG. 2

**0171484**
Nummer der Anmeldung

EP 84 81 0638

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 205 456 (AYERS et al.) <br> * Insgesamt * | 1,5,7 | F 26 B 23/00 |
| X | US-A-4 196 526 (BERTI) <br> * Spalte 6, Zeile 46 - Spalte 7, Zeile 19; Figur 1A * | 1-6 | |
| X | EP-A-0 047 353 (COPPA) <br> * Spalte 7, Zeile 1 - Seite 8, Zeile 24; Figur 4 * | 1-6 | |
| X | GB-A-2 052 704 (G.E.A.) <br> * Seite 3, Zeilen 41-100; Figur 1 * | 1,2,7 | |
| A | | 6 | RECHERCHIERTE SACHGEBIETE (Int. Cl.4) <br><br> F 26 B |

Der vorliegende Recherchenbericht wurde für alle Patentansprüche erstellt.

| Recherchenort <br> DEN HAAG | Abschlußdatum der Recherche <br> 16-10-1985 | Prüfer <br> DE RIJCK F. |
|---|---|---|